# FASCICULE DE BREVET EUROPEEN

(11) **EP 3 674 045 B1**
(45) Date de publication et mention de la délivrance du brevet: **18.08.2021**
(21) Numéro de dépôt: 19207626.3
(22) Date de dépôt: 07.11.2019
(51) Int. Cl.: B28B 1/00, B28B 3/20, E04G 21/04, B28B 1/093, B33Y 10/00, B33Y 30/00

(54) **SYSTÈME D' EXTRUSION DE CORDONS DE MATÉRIAU DE CONSTRUCTION POUR ROBOT DE FABRICATION ADDITIVE DE STRUCTURES ARCHITECTURALES COMPRENANT UN DISPOSITIF DE FLUIDIFICATION DU MATÉRIAU CIMENTAIRE EXTRUDÉ**
SYSTEM ZUR EXTRUSION VON BAUMATERIALSTRÄNGEN FÜR ROBOTER ZUR ADDITIVEN FERTIGUNG VON ARCHITEKTONISCHEN STRUKTUREN, DAS EINE VERFLÜSSIGUNGSVORRICHTUNG DES EXTRUDIERTEN ZEMENTMATERIALS UMFASST
SYSTEM FOR EXTRUSION OF BEADS OF CONSTRUCTION MATERIAL FOR A ROBOT FOR ADDITIVE MANUFACTURING OF ARCHITECTURAL STRUCTURES INCLUDING A DEVICE FOR FLUIDIFICATION OF THE EXTRUDED CEMENT MATERIAL

(30) Priorité: 15.11.2018 FR 1860563
(43) Date de publication de la demande: 01.07.2020
(73) Titulaire: XtreeE, 94623 Rungis Cedex (FR)
(72) Inventeur: ROUX, Philippe, 94623 RUNGIS CEDEX (FR); MALLET, Alban, 94623 RUNGIS CEDEX (FR); BOUYSSOU, Charles, 94623 RUNGIS CEDEX (FR); AKHAVAN ZAKERI, Mahriz, 94623 RUNGIS CEDEX (FR); DUBALLET, Romain, 94623 RUNGIS CEDEX (FR)
(74) Mandataire: Bringer IP

(56) Documents cités:
- WO-A1-2013/064826
- WO-A2-2007/050972
- CN-U- 204 354 263

## Description

### 1. Domaine technique de l'invention

L'invention concerne la fabrication additive de matériaux de construction. L'invention concerne plus particulièrement un système d'extrusion de cordons de matériau de construction pour robot de fabrication additive de structures architecturales par empilement de couches successives de cordons extrudés comprenant un dispositif de fluidification des cordons extrudés. L'invention concerne également un robot de fabrication additive de structures architecturales comprenant un tel système d'extrusion. L'invention concerne également un procédé d'extrusion de cordons de matériau de construction.

### 2. Arrière-plan technologique

Dans tout le texte, les termes « matériaux de construction » désignent tous types de matériaux pouvant être utilisés pour produire des structures architecturales par empilement de couches de cordons extrudés de ces matériaux. Il s'agit par exemple de matériaux cimentaires, de matériaux à base de plâtre, et d'une manière générale de tous matériaux à pâtes visqueuses compatibles avec la fabrication additive de structures architecturales.

Dans tout le texte, les termes « structures architecturales » désignent à la fois des éléments de construction individuels (pont, pilier, mur, mobilier urbain, etc.), des structures complètes (bâtiment, maison, immeuble, etc.) et des pièces architecturales diverses (œuvres artistiques, sculptures, etc.).

La fabrication additive de structures architecturales par empilement de couches de cordons extrudés, dont dérive l'impression 3D de matériaux de construction, en particulier de matériaux cimentaires, est une nouvelle technologie très prometteuse dans le domaine de l'architecture et de la construction.

En effet, l'impression 3D de matériau de construction apporte de nombreux avantages par rapport aux techniques traditionnelles parmi lesquels notamment la possibilité de pouvoir réaliser des formes complexes par ajout de couches successives de matériau de construction, la rapidité des opérations de construction, la réduction des coûts et de la main d'oeuvre, une sécurité améliorée sur les chantiers, etc.

La maitrise de l'impression 3D de matériau de construction fait appel à des compétences dans le domaine de la mécanique des fluides, la mécanique, l'électronique et le génie civil. L'extrusion de matériau de construction destinée à la fabrication d'une structure architecturale met en œuvre une tête d'extrusion (aussi désignée parfois par les termes de tête d'impression) comprenant une bouche d'entrée de matériau de construction, une buse de sortie de matériau de construction et une pompe de dosage configurée pour pouvoir véhiculer le matériau de construction de la bouche d'entrée vers la buse de sortie. L'extrusion de matériau de construction met également en œuvre un circuit d'alimentation de la tête d'extrusion en matériau de construction comprenant un réservoir de stockage de matériau de construction, une conduite reliant le réservoir de stockage et l'entrée de la tête d'extrusion et une pompe de gavage de la conduite d'alimentation en matériau de construction issu du réservoir de stockage.

La tête d'extrusion est destinée à être déplacée par un système de positionnement, tel qu'un bras articulé d'un robot, le long d'une trajectoire prédéterminée, de manière à pouvoir former une pièce architecturale par empilement de couches successives de cordons extrudés.

L'une des difficultés de l'impression 3D de matériaux cimentaires réside dans le fait que le matériau cimentaire doit être fourni dans un état rhéologique compatible avec un pompage de ce matériau, c'est à dire suffisamment fluide pour pouvoir être pompé du réservoir de stockage et véhiculé vers la buse de sortie, alors que son état doit être assez visqueux (c'est à dire moins fluide) en aval de la buse de sortie pour pouvoir former une couche autoportante et susceptible de supporter la couche suivante.

Pour ce faire, le déposant a déjà proposé dans sa demande de brevet PCT/FR2018/051371 d'équiper le système d'extrusion d'un dispositif d'adjuvantation relié à la tête d'extrusion en amont de la buse de sortie adapté pour pouvoir injecter des adjuvants qui modifient les caractéristiques du matériau cimentaire avant extrusion des cordons du matériau cimentaire par la buse de sortie.

Un tel système permet donc de véhiculer le matériau cimentaire jusqu'à la tête d'impression dans un état compatible avec un pompage optimisé et de ne modifier ses propriétés physiques (par exemple sa rhéologie, sa force tensioactive, sa plasticité, sa stabilité, sa thixotropie, etc.) uniquement avant la dépose de la couche par la buse de sortie.

Cette solution produit de bons résultats mais ne permet pas encore de totalement résoudre le problème de l'hétérogénéité de la structure architecturale imprimée par un tel système. Cette hétérogénéité de la structure imprimée résulte notamment de la difficulté de fusionner les cordons les uns avec les autres du fait que le cordon fraichement extrudé (aussi désigné dans tout le texte par les termes de « cordon supérieur ») ne présente pas le même état rhéologique que le cordon précédemment extrudé (aussi désigné dans tout le texte par les termes de « cordon inférieur »), en particulier lorsque des agents accélérants sont utilisés pour accélérer la prise des cordons. Ce défaut d'hétérogénéité peut générer des zones de faiblesses à chaque interface entre les cordons, en particulier lorsque les cordons s'étendent sur de longues portions rectilignes ou que la tête d'impression du robot de fabrication additive se déplace à faible vitesse, de telle sorte que le temps écoulé entre l'extrusion de la couche supérieure et la couche inférieure est suffisamment important pour que les propriétés du matériau changent d'une couche à l'autre.

Pour pallier cette difficulté, il a été testé de ne pas utiliser des agents accélérants pour qu'un cordon fraichement extrudé présente un état proche de celui du cordon précédemment extrudé. Cette solution n'est pas viable dans la mesure où les cordons ne sont alors pas suffisamment résistants pour supporter plusieurs couches de cordons. Il est alors nécessaire d'interrompre l'impression pour attendre que les cordons soient suffisamment robustes. Cela ralentit le procédé d'impression et/ou limite les formes de structures imprimables par un tel système.

Les inventeurs ont donc cherché à améliorer leur système d'impression pour pallier ces problèmes.

WO 2013/064826 A1 divulgue un système et procédé d'extrusion de cordons de matériau de construction pour robot de fabrication additive de structures architecturales suivant le préambule des revendications 1 et 11.

### 3. Objectifs de l'invention

L'invention vise donc à fournir un système d'extrusion de matériau de construction, en particulier de matériau cimentaire, qui permet de résoudre au moins certains des inconvénients des solutions antérieures.

L'invention vise en particulier à fournir, dans au moins un mode de réalisation, un système d'extrusion de matériau de construction, en particulier de matériau cimentaire, qui permet de fabriquer des structures architecturales sans nécessiter d'interrompre l'impression pour attendre la prise des cordons.

L'invention vise aussi à fournir, dans au moins un mode de réalisation, un système d'extrusion de matériau de construction, en particulier de matériau cimentaire, compatible avec l'utilisation d'agents accélérants.

L'invention vise aussi à fournir, dans au moins un mode de réalisation de l'invention, un système d'extrusion qui permet de fabriquer des structures architecturales dont la géométrie n'est pas imposée par des contraintes de hauteur.

L'invention vise aussi à fournir, dans au moins un mode de réalisation de l'invention, un système d'extrusion qui permet la fabrication de structures architecturales de manière précise, stable, répétable et à moindre coût.

L'invention vise aussi à fournir, dans au moins un mode de réalisation de l'invention, un système d'extrusion qui permet de renforcer la cohésion de deux couches de cordons superposées.

L'invention vise aussi à fournir un robot équipé d'un système d'extrusion de cordons de matériau de construction selon l'invention.

L'invention vise enfin à fournir un procédé d'extrusion de cordons de matériau de construction.

### 4. Exposé de l'invention

Pour ce faire, l'invention concerne un système d'extrusion de cordons de matériau de construction pour robot de fabrication additive de structures architecturales selon la revendication 1.

Un système selon l'invention permet donc de surmonter les problèmes des systèmes antérieurs en fluidifiant les cordons de la couche inférieure avant coulage de la couche supérieure. Les inventeurs ont eu l'idée, qui va à l'encontre des différents enseignements du domaine technique, de re-fluidifier les cordons après extrusion pour qu'ils retrouvent un état proche de celui des cordons en cours d'extrusion. Cette idée pouvait apparaitre étonnante de prime abord dans la mesure où un système d'extrusion met en général en œuvre un agent accélérant destiné précisément à accélérer la prise en sortie de tête d'extrusion pour que la couche ainsi extrudée puisse supporter les cordons suivants. En réalité, les inventeurs ont déterminé qu'un cordon extrudé peut retrouver un état fluide s'il est agité rapidement après son extrusion et que cela permet d'améliorer la cohésion entre les couches. L'idée est donc de fluidifier localement le cordon inférieur pour maximiser l'adhérence entre les couches, sans pour autant remettre en cause l'utilisation des agents accélérants qui permettent d'accélérer la prise.

Cette refluidification des cordons de la couche inférieure réduit la porosité des cordons et génère donc une interface entre les cordons de meilleure qualité. En outre, cette refluidification du cordon de la couche inférieure s'effectue juste avant la dépose du cordon de la couche supérieure (dans la mesure où le dispositif est configuré pour fluidifier le cordon inférieur en aval de la tête d'extrusion selon la trajectoire de déplacement de la tête d'extrusion), ce qui permet au cordon de la couche inférieure de retrouver son état fluide sans dégrader le matériau, juste avant de recevoir le cordon supérieur.

Dans tout le texte, les termes « en aval de la tête d'extrusion » désignent l'espace vers lequel la tête d'extrusion se dirige lorsqu'elle suit la trajectoire prédéterminée. Ainsi, une portion de cordon inférieur en aval de tête d'impression est une portion d'un cordon de la couche inférieure à celle en cours d'extrusion qui est agencée devant la tête d'extrusion et qui s'apprête à être recouverte par le cordon en cours d'extrusion.

Avantageusement et selon l'invention, ledit dispositif de fluidification comprend des moyens de vibration du cordon inférieur adaptés pour pouvoir faire vibrer localement ledit cordon inférieur, avant extrusion du cordon supérieur sur ce cordon inférieur, de manière à pouvoir modifier le seuil de cisaillement dudit cordon inférieur qui le fait passer d'un état visqueux correspondant à l'état du cordon après extrusion, à un état fluide moins visqueux maximisant l'adhérence entre ledit cordon supérieur en cours d'extrusion et ledit cordon inférieur.

Un système selon cette variante avantageuse permet de fluidifier le cordon de la couche inférieure en mettant en œuvre des moyens vibrants configurés pour pouvoir faire vibrer localement le cordon de la couche inférieure. Cette vibration du cordon est de préférence faite de manière contrôlée juste avant la dépose du cordon supérieur pour permettre au cordon inférieur de retrouver un état fluide sans dégrader le matériau, ni la géométrie de la dépose.

En d'autres termes, le système selon cette variante comprend des moyens de vibration dudit cordon inférieur adaptés pour pouvoir faire vibrer localement ledit cordon inférieur en aval de ladite tête d'extrusion selon ladite trajectoire prédéterminée de manière à ce qu'il puisse modifier le seuil ce cisaillement du cordon inférieur.

Différents moyens vibrants peuvent être utilisés pour fluidifier les cordons inférieurs.

Par exemple et selon une première variante de l'invention, lesdits moyens de vibration comprennent au moins une aiguille, dite aiguille vibrante, reliée à un moteur de vibration de ladite aiguille vibrante et à un mécanisme adapté pour pouvoir déplacer ladite aiguille vibrante d'une position, dite position rétractée dans laquelle elle est écartée dudit cordon inférieur de ladite couche inférieure, à une position, dite position de vibration, dans laquelle une extrémité de l'aiguille peut être insérée dans ledit cordon inférieur de ladite couche inférieure.

Selon cette variante avantageuse, une aiguille vibrante est utilisée pour permettre d'agiter localement le cordon inférieur pour qu'il retrouve un état fluide permettant de maximiser l'adhérence entre le cordon supérieur en cours d'extrusion et le cordon inférieur.

Cette aiguille vibrante présente de préférence un diamètre largement inférieur à l'épaisseur du cordon inférieur, par exemple égal à moins de 10% de la largeur de l'épaisseur du cordon inférieur. Le mécanisme de placement de l'aiguille est de préférence configuré pour pouvoir placer l'aiguille dans ladite position de vibration au centre du cordon. Le moteur de vibration est de préférence configuré pour pouvoir entrainer l'aiguille vibrante suivant des mouvements rapides et de faible amplitude par rapport à l'épaisseur du cordon, permettant de ramollir le cordon.

Selon une autre variante, l'aiguille vibrante est remplacée par une lame vibrante reliée à un mécanisme adapté pour déplacer la lame de ladite position rétractée dans laquelle elle est écartée dudit cordon inférieur de ladite couche inférieure, à ladite position de vibration dans laquelle une extrémité de la lame est insérée dans ledit cordon inférieur de ladite couche inférieure.

Selon l'une ou l'autre de ces deux variantes, l'aiguille vibrante ou la lame vibrante peut être configurée pour pouvoir, dans la position de vibration, être insérée dans au moins deux cordons inférieurs successifs de manière à pouvoir fluidifier, non seulement le cordon de la couche précédemment extrudée, mais également la couche pénultième, c'est-à-dire celle extrudée avant l'extrusion de ladite couche inférieure.

Selon une autre variante de réalisation, les moyens de vibration comprennent un générateur directif d'ondes mécaniques adapté pour pouvoir générer des ondes mécaniques vers ledit cordon inférieur de ladite couche inférieure pour pouvoir fluidifier localement ce cordon inférieur.

Selon cette variante avantageuse, la fluidification du cordon inférieur est obtenue par un générateur directif d'ondes mécaniques. Cela permet de fluidifier le cordon sans contact mécanique avec le cordon.

Le générateur d'ondes mécaniques est par exemple un générateur d'ondes sonores, du type infrasons à forte amplitude ou ultrasons à faible amplitude. Un tel générateur peut par exemple comprendre un actionneur piézoélectrique.

Le choix du type de générateur d'ondes sonores dépend du type de matériau et d'adjuvants utilisés par le système d'impression.

Avantageusement et selon l'invention, ledit dispositif de fluidification est porté par ladite tête d'extrusion par l'intermédiaire d'un support de montage.

Cette variante avantageuse permet de lier les déplacements de la tête d'extrusion aux déplacements du dispositif de fluidification des cordons. En particulier, cette variante avantageuse permet de fluidifier les cordons de manière synchronisée avec l'extrusion des cordons.

Avantageusement et selon l'invention, la tête d'extrusion comprend un carter s'étendant le long d'une direction, dite direction longitudinale, et le support de montage portant ledit dispositif de fluidification est monté mobile en rotation sur ledit carter de ladite tête d'extrusion autour d'un axe s'étendant le long de ladite direction longitudinale.

Selon cette variante avantageuse, le dispositif de fluidification peut être positionné en regard de n'importe quel cordon extrudé, quelle que soit son orientation. En particulier, cette variante permet de fluidifier les cordons au niveau des courbures et angles de la structure architecturale.

En variante ou en combinaison, le support de montage est mobile en translation le long du carter de la tête d'extrusion de manière à pouvoir adapter la distance qui sépare le dispositif de fluidification et le cordon à fluidifier.

L'invention concerne également un robot de fabrication additive de structures architecturales comprenant un système de positionnement, tel qu'un bras articulé, piloté par une unité de commande, et un système d'extrusion comprenant une tête d'extrusion montée sur ledit système de positionnement de sorte que le déplacement du système de positionnement portant ladite tête d'extrusion selon une trajectoire prédéterminée permette la fabrication d'une structure architecturale par empilement de couches de cordons de matériau cimentaire, caractérisé en ce que ledit système d'extrusion est conforme à l'invention.

L'invention concerne également un procédé d'extrusion de cordons de matériau de construction pour robot de fabrication additive de structures architecturales selon la revendication 11.

Un procédé selon l'invention est avantageusement mis en œuvre par un système d'extrusion selon l'invention et un système d'extrusion selon l'invention met avantageusement en œuvre un procédé selon l'invention.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un système d'extrusion selon un mode de réalisation de l'invention,
- la figure 2 est une vue schématique d'une tête d'extrusion d'un système d'extrusion selon un mode de réalisation de l'invention,
- la figure 3 est une vue schématique d'un dispositif de fluidification des cordons monté sur une tête d'extrusion, partiellement représentée, d'un système d'extrusion selon un mode de réalisation de l'invention,
- la figure 4 est une vue schématique d'un dispositif de fluidification de cordons extrudés, partiellement représentée, d'un système d'extrusion selon un autre mode de réalisation de l'invention,
- la figure 5 est une vue schématique d'un robot de fabrication additive selon un mode de réalisation de l'invention,
- la figure 6 est une vue schématique d'un procédé d'extrusion selon un mode de réalisation de l'invention.

### 6. Description détaillée de modes de réalisation de l'invention

Sur les figures, les échelles et les proportions ne sont pas strictement respectées et ce, à des fins d'illustration et de clarté. Dans toute la description détaillée qui suit en référence aux figures, sauf indication contraire, chaque élément du système d'extrusion est décrit tel qu'il est agencé lorsque le système d'extrusion est mis en œuvre dans le cadre de la fabrication d'une structure architecturale par empilement de couches de cordons extrudés.

En outre, les éléments identiques, similaires ou analogues sont désignés par les mêmes références dans toutes les figures.

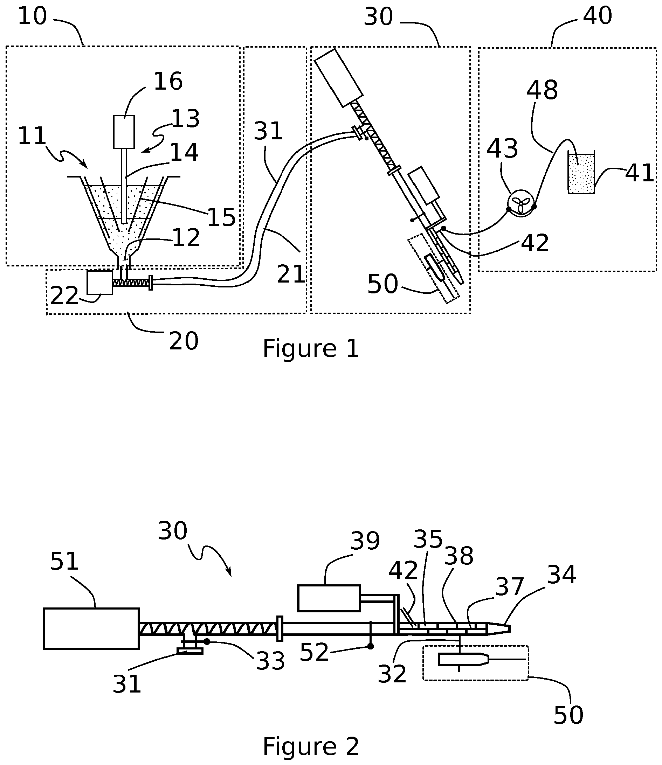

Un système d'extrusion selon un mode préférentiel de réalisation de l'invention comprend, tel que représenté sur la figure 1, un réservoir de stockage 10 d'un matériau cimentaire de construction, une tête d'extrusion 30, un circuit 20 d'alimentation en matériau cimentaire de construction de la tête d'extrusion 30, un dispositif d'adjuvantation 40 relié à la tête d'impression 30, et un dispositif de fluidification 50 des cordons extrudés.

Dans toute la suite, l'invention est décrite en considérant que le matériau utilisé est un matériau cimentaire de construction, étant entendu que n'importe quel autre matériau de construction à pâte visqueuse tel que défini dans le texte peut être utilisé dans le cadre de cette invention.

Chacun des différents ensembles du système listés ci-dessus va maintenant être décrit en détail.

### Réservoir de stockage 10

Le réservoir de stockage 10 est de préférence une trémie comprenant une ouverture supérieure 11 adaptée pour recevoir des gâchées de matériaux cimentaires et une sortie inférieure 12 reliée au circuit 20 d'alimentation. La trémie peut en outre comprendre un agitateur 13 comprenant un arbre 14 portant une pluralité de pales latérales 15 par l'intermédiaire d'axes perpendiculaires à l'arbre 14, et un moteur 16 de mise en rotation de l'arbre 14. Le moteur 16 est par exemple un moteur électrique configuré pour pouvoir entraîner à faible vitesse, par exemple à une vitesse de six tours par minute, l'arbre 14 de l'agitateur 13. L'utilisation d'un moteur thermique est bien sûr possible sans modifier les performances du système d'extrusion selon l'invention. Le rôle de l'agitateur est de pouvoir maintenir le matériau cimentaire dans la trémie à un état rhéologique quasi-constant avant d'être conduit vers la tête d'impression par le circuit 20 d'alimentation.

Le matériau cimentaire utilisé est par exemple un prémix à base de ciment avec des particules fines, hydraté et fluidifié.

### Circuit d'alimentation 20

Le circuit d'alimentation 20 relie le réservoir de stockage 10 à la tête d'extrusion 30. Ce circuit comprend une conduite 21 reliant la sortie 12 du réservoir de stockage 10 à une bouche d'entrée 31 de la tête d'extrusion 30. Cette conduite 21 est par exemple un tuyau souple. Le circuit d'alimentation 20 comprend en outre une pompe de gavage 22. Cette pompe de gavage 22 est par exemple asservie en pression/débit par un capteur de pression 33 agencé au voisinage de la bouche d'entrée 31 de la tête d'extrusion 30. Cette pompe de gavage 22 est par exemple une pompe à vis excentrée de manière à pouvoir véhiculer le matériau cimentaire vers la tête d'extrusion 30 en minimisant les pulsations. Cette pompe de gavage 22 est par exemple une pompe commercialisée sous les références Putzmeister® FP-V Mono. Bien entendu, d'autres pompes peuvent être utilisées sans modifier les performances de l'invention. Le capteur 33 de pression/débit peut être de tous types connus. Il s'agit par exemple d'un capteur commercialisé sous la référence ifm® PF2953. Bien entendu, d'autres capteurs peuvent être utilisés sans modifier les performances de l'invention. La pompe de gavage 22 est configurée pour suivre une loi d'asservissement prédéterminée et paramétrable par un opérateur en fonction des besoins. Par exemple, la loi d'asservissement est paramétrée pour maintenir la pression du matériau cimentaire entre 2 et 6 bars.

### Tête d'extrusion 30

La tête d'extrusion 30 comprend, tel que représenté schématiquement par la figure 2, une bouche d'entrée 31 reliée au circuit d'alimentation 20 et une buse 34 de sortie configurée pour former des cordons de matériau cimentaire.

La tête d'extrusion comprend en outre de préférence une enceinte de mélange 35 agencée en amont de la buse 34 de sortie. Cette enceinte de mélange 35 est équipée d'un mélangeur dynamique adapté pour pouvoir mélanger le matériau cimentaire et d'éventuels adjuvants fournis par le dispositif d'adjuvantation 40.

Ce mélangeur dynamique comprend par exemple un arbre 37 s'étendant longitudinalement dans l'enceinte de mélange 35 sur lequel sont montés des doigts radiaux 38 répartis le long de l'arbre 37. Le mélangeur dynamique comprend également un moteur 39 configuré pour pouvoir entrainer l'arbre 37 en rotation de manière à pouvoir fournir un mélange homogène du matériau cimentaire. Ce moteur 39 peut être un moteur électrique, un moteur thermique, et de manière générale tous types de moteurs. Selon le mode de réalisation des figures, le moteur 39 est déporté par rapport à l'arbre 37 pour limiter au maximum la perturbation du mélange dans l'enceinte de mélange 35.

La tête d'extrusion 30 comprend également une pompe de dosage 51 à vis excentrée configurée pour pouvoir véhiculer le matériau cimentaire de la bouche d'entrée 31 vers la buse de sortie, en passant par l'enceinte de mélange 35. Une telle pompe de dosage est par exemple une pompe commercialisée sous les références Viscotec® 3VMP36. Bien entendu, d'autres pompes peuvent être utilisées sans modifier les performances de l'invention.

Selon un autre mode de réalisation non représenté sur les figures, la pompe de dosage 51 est remplacée par un doseur volumétrique configuré pour pouvoir assurer un débit constant sur une plage prédéterminée de fonctionnement.

La tête d'extrusion 30 comprend également un capteur de pression 52 de sécurité agencé en amont de l'enceinte de mélange 35. Ce capteur est par exemple un capteur commercialisé sous les références ifm® PF2953. Bien entendu, d'autres capteurs peuvent être utilisés sans modifier les performances de l'invention. Ce capteur 52 de sécurité permet de mesurer la pression en amont de l'enceinte de mélange 35 de manière à pouvoir prévenir des risques de bouchage de l'enceinte de mélange 35 ou de la buse de sortie 34. Ce capteur peut par exemple être relié à un système d'arrêt automatique du système d'extrusion dès qu'un seuil de pression est atteint.

La buse de sortie 34 de la tête d'impression est de préférence démontable de manière à pouvoir adapter la forme de la buse de sortie 34 à la pièce à fabriquer. En particulier, la section de la buse de sortie 34 peut être adaptée à chaque type de pièce fabriquée, voire changée en cours d'impression pour modifier la section des cordons de certaines portions de la pièce fabriquée. Pour ce faire, la buse de sortie comprend par exemple une paroi externe filetée qui coopère avec une portion interne filetée de la paroi de la tête d'impression délimitant l'enceinte de mélange 35. Selon une autre variante, la buse de sortie comprend une paroi interne filetée qui coopère avec une portion externe filetée de la paroi de la tête d'impression.

### Dispositif d'adjuvantation 40

Le dispositif d'adjuvantation 40, comprend tel que représenté sur la figure 1 un fût 41 contenant une pluralité d'adjuvants, au moins une aiguille 42 reliée au fût 41 par l'intermédiaire d'un tuyau 48, d'un doseur volumétrique et d'une pompe péristaltique 43. Les adjuvants du fût 41 d'adjuvants peuvent être de tous types. Il s'agit d'adjuvants visant à modifier n'importe quelle propriété physique du matériau cimentaire (principalement sa rhéologie, mais également sa force tensioactive, sa plasticité, sa stabilité, sa thixotropie, etc.).

Les adjuvants sont par exemple des agents accélérants permettant d'accélérer la prise des cordons.

Tel que représenté de manière plus détaillée sur le figure 2, l'aiguille 42 débouche dans l'enceinte de mélange 35, à l'opposé de la buse de sortie 34, suivant une direction d'adjuvantation, qui forme par exemple un angle de 45° avec la direction principale de l'enceinte de mélange.

### Dispositif de fluidification des cordons 50

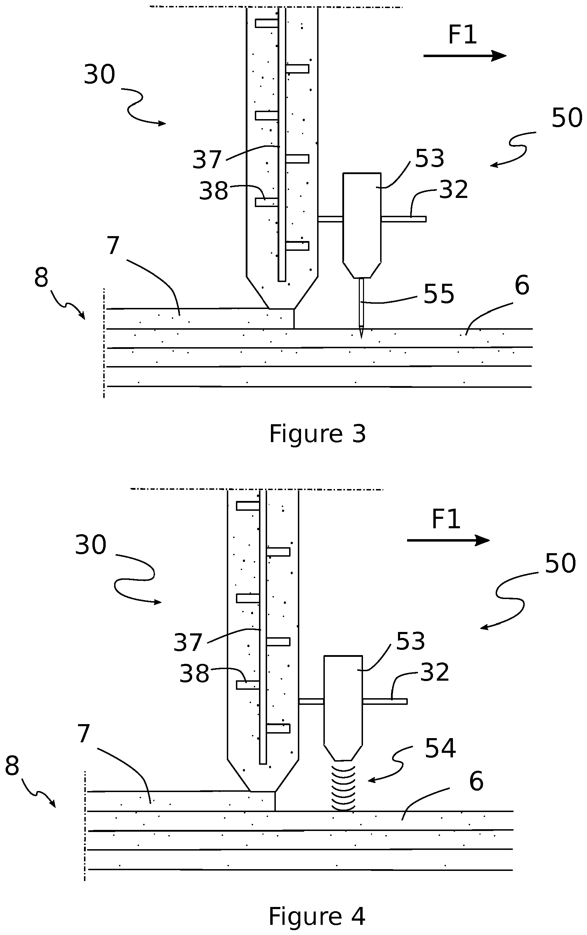

Le dispositif de fluidification 50 des cordons est schématiquement représenté sur les figures 1 et 2 par la référence 50 et est illustré de manière plus détaillée sur les figures 3 et 4 pour deux modes de réalisation distincts.

Sur les figures 3 et 4, le dispositif de fluidification 50 est porté par la tête d'extrusion 30 par l'intermédiaire d'un support de montage 32. Ce support de montage 32 peut être monté mobile en rotation autour de l'axe principal de la tête d'extrusion de manière à pouvoir déplacer le dispositif de fluidification autour de la tête d'extrusion.

La tête d'extrusion est déplacée suivant une trajectoire prédéterminée représentée schématiquement par la flèche référencée F1 sur les figures 3 et 4, c'est-à-dire de la gauche vers la droite.

Dans toute la suite et par rapport à la position de la tête d'extrusion, les éléments à gauche de la tête sont dits en amont de la tête suivant la trajectoire prédéterminée et les éléments à droite de la tête sont dits en aval de la tête suivant la trajectoire prédéterminée.

La tête d'extrusion est déplacée suivant la trajectoire prédéterminée pour former une structure architecturale 8 par empilement successif de couches de cordons extrudés. Le cordon en cours d'extrusion, dit cordon supérieur, présente la référence 7 et le cordon extrudé de la couche inférieure, dit cordon inférieur, présente la référence 6.

Le dispositif de fluidification est configuré pour pouvoir fluidifier le cordon 6 en aval de la tête d'extrusion 30 selon la trajectoire prédéterminée F1, de manière à maximiser l'adhérence entre le cordon supérieur 7 en cours d'extrusion et le cordon inférieur 6.

Le dispositif de fluidification 50 selon le mode de réalisation de la figure 3 comprend des moyens de vibration du cordon 6 inférieur qui se présentent sous la forme d'une aiguille 55 reliée à un moteur, non représenté sur les figures, permettant de faire vibrer l'aiguille. Ce moteur est par exemple logé dans un carter 53. Le moteur est par exemple configuré pour pouvoir agir sur l'aiguille 55 de telle manière qu'elle soit entrainée en une série de mouvements de va et vient rapide de faible amplitude dans le cordon 6, par rapport à l'épaisseur du cordon.

L'aiguille 55 vibrante peut être reliée à un mécanisme adapté pour pouvoir la déplacer d'une position rétractée dans laquelle elle est écartée du cordon 6 inférieur, à une position de vibration, dans laquelle une extrémité de l'aiguille 55 peut être insérée dans le cordon 6 inférieur.

La figure 4 illustre un dispositif de fluidification selon un autre mode de réalisation. Selon ce mode de réalisation, les moyens de vibration comprennent un générateur directif d'ondes 54 mécaniques, telles que des ondes sonores, du type infrasons ou ultrasons, adapté pour pouvoir générer des ondes 54 vers le cordon 6 inférieur. Ce générateur comprend par exemple un actionneur piézoélectrique.

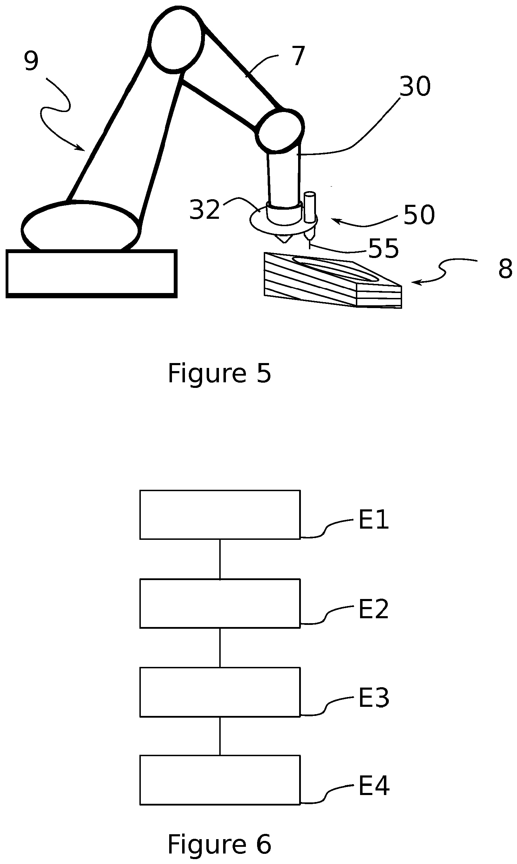

La figure 5 est une vue schématique d'un robot 9 de fabrication additive d'une structure architecturale 8 selon un mode de réalisation de l'invention. Un tel robot 9 comprend un bras articulé 7, piloté par une unité de commande non représentée sur les figures, qui porte la tête d'extrusion 30 d'un système d'extrusion selon l'invention.

Sur la figure 5, seuls la tête d'extrusion 30 et le dispositif de fluidification 50 des cordons du mode de réalisation de la figure 3 sont représentés à des fins de clarté, étant entendu que la tête d'extrusion 30 est alimentée en matériau cimentaire par un circuit d'alimentation et un réservoir de stockage tel que décrit précédemment. En outre, un tel robot peut bien sur mettre en œuvre le dispositif de fluidification du mode de réalisation de la figure 4.

Le robot 9 est commandé par une unité de commande pour entrainer le déplacement de la tête d'extrusion 30 suivant une trajectoire prédéterminée permettant de fabriquer la structure architecturale 8 par empilement de couches de cordons extrudés. La mise en œuvre du dispositif de fluidification 50 permet, comme indiqué précédemment, de maximiser l'adhérence entre les cordons.

La figure 6 est une vue schématique d'un procédé d'extrusion de cordons de matériau cimentaire pour robot de fabrication additive de structures architecturales selon l'invention.

Le procédé comprend une première étape E1 d'alimentation en matériau de construction d'une tête d'extrusion de cordons de matériau de construction à partir d'un réservoir de stockage de matériau de construction, ladite tête d'extrusion comprenant une bouche d'entrée de matériau de construction et une buse de sortie configurée pour former des cordons extrudés de matériau de construction.

Le procédé comprend une étape E2 de déplacement de ladite tête d'extrusion suivant une trajectoire prédéterminée pour former une structure architecturale par empilement de couches de cordons extrudés.

Le procédé comprend également une étape E3 concomitante d'extrusion de cordons de matériau de construction par la tête d'extrusion au cours du déplacement de la tête d'extrusion sur ladite trajectoire prédéterminée.

Enfin, le procédé comprend une étape E4 concomitante de fluidification, en aval de ladite tête d'extrusion sur ladite trajectoire prédéterminée, du cordon inférieur 6 au cordon 7 en cours d'extrusion, ce qui permet de maximiser l'adhérence entre les cordons 6 et 7.

Un procédé selon l'invention est de préférence mis en œuvre par un robot selon l'invention.

L'invention ne se limite pas aux seuls modes de réalisation décrits. En particulier, selon d'autres modes de réalisation, le robot peut être un robot six axes, monté sur rails ou non, sur portique ou non. Le robot peut également être un robot à câbles ou tous types de robots dont le système de positionnement, tel qu'un bras articulé, peut être piloté par ordinateur.

Un robot selon l'invention peut être utilisé pour fabriquer tous types de pièces architecturales. Une telle pièce architecturale peut être une pièce de renfort, un bâtiment, et de manière générale, toute pièce en matériau cimentaire. Les pièces architecturales fabriquées par l'utilisation d'un système d'extrusion selon l'invention peuvent être d'échelles variées. Il peut s'agir d'une portion de poteau, d'un poteau entier, d'un mur, d'un élément de dalle, d'un bâtiment, d'un mobilier urbain, d'une sculpture, etc.

## Revendications

1. Système d'extrusion de cordons de matériau de construction pour robot (9) de fabrication additive de structures architecturales (8) comprenant :
- une tête d'extrusion (30) de cordons de matériau de construction comprenant une bouche d'entrée (31) de matériau de construction, une buse de sortie (34) configurée pour former des cordons (6, 7) de matériau de construction et une pompe de dosage (51) configurée pour pouvoir véhiculer le matériau de construction de la bouche d'entrée (31) vers la buse de sortie (34), ladite tête d'extrusion (30) étant destinée à être déplacée par un robot (9) de fabrication additive selon une trajectoire prédéterminée pour former une structure architecturale (8) par empilement successif de couches de cordons (6, 7) extrudés,
- un circuit d'alimentation (20) en matériau de construction de ladite tête d'extrusion (30) comprenant un réservoir de stockage (10) de matériau de construction, une conduite d'alimentation (21) en matériau de construction reliant ledit réservoir de stockage (10) et ladite tête d'extrusion (30), et une pompe de gavage (22) de ladite conduite d'alimentation (21) en matériau de construction issu du réservoir de stockage (10),
comprenant en outre un dispositif de fluidification (50) des cordons extrudés adapté pour pouvoir, pour au moins un cordon d'une couche de cordons en cours d'extrusion par ladite tête d'extrusion (30) sur ladite trajectoire prédéterminée, dit cordon supérieur (7), fluidifier au moins un cordon de la couche de cordons précédemment extrudée, dit cordon inférieur (6), de manière à maximiser l'adhérence entre ledit cordon supérieur (7) en cours d'extrusion et ledit cordon inférieur (6) fluidifié par ce dispositif de fluidification (50), **caractérisé en ce que** ledit dispositif de fluidification est adapté pour fluidifier ledit au moins un cordon inférieur en aval de ladite tête d'extrusion (30) sur ladite trajectoire prédéterminée avant extrusion dudit cordon supérieur (7) sur ce cordon inférieur.

2. Système selon la revendication 1, **caractérisé en ce que** ledit dispositif de fluidification (50) comprend des moyens de vibration dudit cordon inférieur adaptés pour pouvoir faire vibrer localement ledit cordon inférieur (6), avant extrusion du cordon supérieur (7) sur ce cordon inférieur, de manière à pouvoir modifier le seuil de cisaillement dudit cordon inférieur (6) qui le fait passer d'un état visqueux correspondant à l'état du cordon après extrusion, à un état fluide moins visqueux maximisant l'adhérence entre ledit cordon supérieur en cours d'extrusion et ledit cordon inférieur.

3. Système selon la revendication 2, **caractérisé en ce que** lesdits moyens de vibration comprennent au moins une aiguille, dite aiguille vibrante (55), reliée à un moteur de vibration de ladite aiguille vibrante et à un mécanisme adapté pour pouvoir déplacer ladite aiguille vibrante (55) d'une position, dite position rétractée dans laquelle elle est écartée dudit cordon inférieur (6) de la couche inférieure, à une position, dite position de vibration, dans laquelle une extrémité de l'aiguille (55) peut être insérée dans ledit cordon inférieur de ladite couche inférieure.

4. Système selon la revendication 2, **caractérisé en ce que** lesdits moyens de vibration comprennent un générateur directif d'ondes (54) mécaniques adapté pour pouvoir générer des ondes mécaniques vers ledit cordon inférieur (6) de ladite couche inférieure pour pouvoir fluidifier localement ce cordon inférieur.

5. Système selon la revendication 4, **caractérisé en ce que** ledit générateur directif d'ondes (54) mécaniques est un générateur d'ondes sonores, du type infrasons à forte amplitude ou ultrasons à faible amplitude.

6. Système selon la revendication 5, **caractérisé en ce que** ledit générateur directif d'ondes sonores comprend un actionneur piézoélectrique.

7. Système selon l'une des revendications 1 à 6, **caractérisé en ce que** ledit dispositif de fluidification (50) est porté par ladite tête d'extrusion par l'intermédiaire d'un support de montage (32).

8. Système selon la revendication 7, **caractérisé en ce que** ladite tête d'extrusion (30) comprend un carter s'étendant le long d'une direction, dite direction longitudinale, et **en ce que** ledit support de montage (32) portant ledit dispositif de fluidification (40) est monté mobile en rotation sur ledit carter de ladite tête d'extrusion (30) autour d'un axe s'étendant le long de ladite direction longitudinale.

9. Système selon l'une des revendications 1 à 8, **caractérisé en ce qu'**il comprend en outre un dispositif d'adjuvantation.

10. Robot (8) de fabrication additive de structures architecturales comprenant un système de positionnement, tel qu'un bras articulé, piloté par une unité de commande, et un système d'extrusion comprenant une tête d'extrusion (30) montée sur ledit système de positionnement de sorte que le déplacement du système de positionnement portant ladite tête d'extrusion selon une trajectoire prédéterminée permette la fabrication d'une structure architecturale par empilement de couches de cordons de matériau cimentaire, **caractérisé en ce que** ledit système d'extrusion est conforme à l'une des revendications 1 à 9.

11. Procédé d'extrusion de cordons de matériau de construction pour robot de fabrication additive de structures architecturales comprenant :
- une étape d'alimentation (E1) en matériau de construction d'une tête d'extrusion (30) de cordons de matériau de construction à partir d'un réservoir de stockage (10) de matériau de construction, ladite tête d'extrusion (30) comprenant une bouche d'entrée (31) de matériau de construction et une buse de sortie (34) configurée pour former des cordons extrudés de matériau de construction,
- une étape de déplacement (E2) de ladite tête d'extrusion (30) suivant une trajectoire prédéterminée pour former une structure architecturale par empilement de couches de cordons extrudés,
- une étape concomitante d'extrusion (E3) de cordons de matériau de construction par la tête d'extrusion (30) au cours du déplacement de ladite tête d'extrusion (30) sur ladite trajectoire prédéterminée,
- une étape concomitante de fluidification (E4) des cordons extrudés d'une couche de cordons, dite couche inférieure, extrudés préalablement à la couche de cordons en cours d'extrusion, dite couche supérieure, de manière à maximiser l'adhérence entre les cordons de la couche supérieure et la couche inférieure, **caractérisé en ce que** l'étape de fluidification (E4) est effectuée en aval de ladite tête d'extrusion (30) sur ladite trajectoire prédéterminée.

## Patentansprüche

1. Baumaterialstrang-Extrusionssystem für einen Roboter (9) zur additiven Herstellung architektonischer Strukturen (8), umfassend:
- einen Extrusionskopf (30) für Baumaterialstränge, welcher umfasst, eine Einlassöffnung (31) für Baumaterial, eine Auslassdüse (34), die derart konfiguriert ist, dass sie Stränge (6, 7) aus Baumaterial bildet, und eine Dosierpumpe (51), die derart ausgestaltet ist, dass sie das Baumaterial von der Einlassöffnung (31) zur Auslassdüse (34) fördern kann, worin der Extrusionskopf (30) dazu bestimmt ist, von dem additiven Fertigungsroboter (9) auf einem vorbestimmten Weg bewegt zu werden, um eine architektonische Struktur (8) durch aufeinanderfolgendes Stapeln von Schichten aus extrudierten Kügelchen (6,7) zu bilden
- einen Versorgungskreislauf (20) für Baumaterial des Extrusionskopfes (30), welcher umfasst, einen Vorratstank (10) für Baumaterial, eine Versorgungsleitung (21) für Baumaterial, die den Vorratstank (10) und den Extrusionskopf (30) verbindet, und eine Druckerhöhungspumpe (22) für die Versorgungsleitung (21) mit Baumaterial, das aus dem Vorratstank (10) kommt,
weiter umfassend eine Vorrichtung (50) zum Fluidisieren der extrudierten Schnüre, die derart ausgelegt ist, dass sie mindestens eine Perle einer Schicht von Schnüren, die von dem Extrusionskopf (30) auf dem vorbestimmten Weg extrudiert wird, als oberer Strang (7) bezeichnet, mindestens einen Strang der vorher extrudierten Schicht von Strängen, als unterer Strang (6) bezeichnet, fluidisieren kann, um die Adhäsion zwischen dem oberen Strang (7) während der Extrusion und dem unteren Strang (6), der durch diese Fluidisierungsvorrichtung (50) fluidisiert wird, zu maximieren, **dadurch gekennzeichnet, dass** die Vorrichtung zur Fluidisierung (50) von extrudierten Strängen angepasst ist, den unteren Strang stromabwärts des Extrusionskopfes auf der vorbestimmten Bahn vor der Extrusion des oberen Strangs auf den unteren Strang zu fluidisieren.

2. System nach Anspruch 1, **dadurch gekennzeichnet, dass** die Fluidisierungsvorrichtung (50) Mittel zum Vibrieren des unteren Strangs umfasst, die geeignet sind, den unteren Strang (6) vor der Extrusion des oberen Strangs (7) auf diesem unteren Strang lokal zu vibrieren, um die Scherschwelle des unteren Strangs (6) zu modifizieren, wodurch dieser von einem viskosen Zustand, der dem Zustand des Strangs nach der Extrusion entspricht, in einen weniger viskosen Fluidzustand übergeht, der die Haftung zwischen dem oberen Strang auf dem Extrusionsweg und dem unteren Strang maximiert.

3. System nach Anspruch 2, **dadurch gekennzeichnet, dass** die Vibrationseinrichtung mindestens eine Nadel, die sogenannte Vibrationsnadel (55), umfasst, die mit einem Vibrationsmotor der Vibrationsnadel und mit einem Mechanismus verbunden ist, der geeignet ist, die Vibrationsnadel (55) von einer Position, als zurückgezogene Position bezeichnet, in der sie von dem unteren Strang (6) der unteren Schicht beabstandet ist, in eine Position, als Vibrationsposition bezeichnet, zu bewegen, in der ein Ende der Nadel (55) in den unteren Strang der unteren Schicht eingeführt werden kann.

4. System nach Anspruch 2, **dadurch gekennzeichnet, dass** die Vibrationseinrichtung einen gerichteten Generator für mechanische Wellen (54) umfasst, der derart ausgelegt ist, dass er mechanische Wellen in Richtung des unteren Strangs (6) der unteren Schicht erzeugen kann, um diesen unteren Strang lokal fluidisieren zu können.

5. System nach Anspruch 4, **dadurch gekennzeichnet, dass** der gerichtete Erzeuger mechanischer Wellen (54) ein Schallwellen-Generator ist, vom Typ Infraschall mit hoher Amplitude oder Ultraschall mit niedriger Amplitude.

6. System nach Anspruch 5, **dadurch gekennzeichnet, dass** der gerichtete Schallwellengenerator einen piezoelektrischen Aktor umfasst.

7. System nach einem der Ansprüche 1 bis 6, **dadurch gekennzeichnet, dass** die Fluidisiereinrichtung (50) über einen Montageträger (32) von dem Extrusionskopf getragen wird.

8. System nach Anspruch 7, **dadurch gekennzeichnet, dass** der Extrusionskopf (30) ein Gehäuse aufweist, das sich entlang einer Richtung, die als Längsrichtung bezeichnet wird, erstreckt, und dass der Montageträger (32), der die Fluidisierungsvorrichtung (40) trägt, drehbar an dem Gehäuse des Extrusionskopfes (30) um eine Achse montiert ist, die sich entlang der Längsrichtung erstreckt.

9. System nach einem der Ansprüche 1 bis 8, **dadurch gekennzeichnet, dass** es ferner eine Verflüssigungsvorrichtung umfasst.

10. Additiver Fertigungsroboter (8) für architektonische Strukturen, welcher umfasst, ein Positionierungssystem, wie einen Gelenkarm, der von einer Steuereinheit gesteuert wird, und ein Extrusionssystem, das einen Extrusionskopf (30) aufweist, der auf dem Steuersystem montiert ist, worin die Positionierung derart erfolgt, dass die Bewegung des Positionierungssystems, das den Extrusionskopf entlang eines vorbestimmten Weges trägt, die Herstellung einer architektonischen Struktur durch Stapeln von Schichten von Strängen aus zementartigem Material ermöglicht, **dadurch gekennzeichnet, dass** das Extrusionssystem einem der Ansprüche 1 bis 9 entspricht.

11. Verfahren zum Extrudieren von Strängen aus Baumaterial für einen Roboter zur additiven Herstellung architektonischer Strukturen, umfassend:
- einen Schritt des Zuführens (E1) von Baumaterial zu einem Extrusionskopf (30) von Strängen aus Baumaterial aus einem Vorratstank (10) für Baumaterial, worin der Extrusionskopf (30) eine Einlassöffnung (31) für Baumaterial und eine Auslassdüse (34) umfasst, die derart konfiguriert ist, dass sie extrudierte Stränge aus Baumaterial bildet,
- einen Schritt des Bewegens (E2) des Extrusionskopfes (30) entlang eines vorbestimmten Weges, um eine architektonische Struktur durch Stapeln von Schichten aus extrudierten Strängen zu bilden,
- einen begleitenden Schritt der Extrusion (E3) von Schnüren aus Baumaterial durch den Extrusionskopf (30) während der Bewegung des Extrusionskopfes (30) auf dem vorbestimmten Weg
- einen begleitenden Verflüssigungsschritt (E4) der Stränge, die aus einer Schicht von Strängen, als untere Schicht bezeichnet, extrudiert werden, die vor der Schicht von Strängen, als obere Schicht bezeichnet, extrudiert wird, um die Adhäsion zwischen den Strängen der oberen Schicht und der unteren Schicht zu maximieren,
**dadurch gekennzeichnet, dass** der Verflüssigungsschritt stromabwärts des Extrusionskopfes auf dem vorbestimmten Weg durchgeführt wird.

## Claims

1. Building material bead extrusion system for additive manufacturing robot (9) of architectural structures (8) comprising:
- an extrusion head (30) of cords of construction material comprising an inlet mouth (31) of construction material, an outlet nozzle (34) configured to form cords (6, 7) of construction material and a metering pump (51) configured to be able to convey the material of construction from the inlet mouth (31) to the outlet nozzle (34), said extrusion head (30) being intended to be moved by the additive manufacturing robot (9) according to a predetermined path to form an architectural structure (8) by successive stacking of layers of extruded beads (6, 7),
- a supply circuit (20) of construction material of said extrusion head (30) comprising a storage tank (10) of construction material, a supply line (21) of construction material connecting said tank storage device (10) and said extrusion head (30), and a booster pump (22) for said supply pipe (21) with construction material coming from the storage tank (10),
- a device (50) for fluidizing the extruded cords adapted to be able, for at least one bead, of a layer of cords being extruded by said extrusion head (30) on said predetermined path, called upper bead (7), fluidize at least one bead of the previously extruded layer of beads, called lower bead (6), so as to maximize the adhesion between said upper bead (7) during extrusion and said lower bead (6) fluidized by this fluidizing device (50), **characterized in that** the device for fluidizing (50) extruded cords is adapted to fluidize said lower bead downstream of said extrusion head on the predetermined path before the extrusion of said upper bead on said lower bead.

2. System according to claim 1, **characterized in that** said fluidizing device (50) comprises means for vibrating said lower bead adapted to be able to locally vibrate said lower bead (6), before extrusion of the upper bead (7) on this lower bead, so as to be able to modify the shear threshold of said lower bead (6) which changes it from a viscous state corresponding to the state of the bead after extrusion, to a less viscous fluid state maximizing the adhesion between said upper bead by extrusion course and said lower bead.

3. System according to Claim 2, **characterized in that** the said vibrating means comprises at least one needle, called the vibrating needle (55), connected to a vibration motor of said vibrating needle and to a mechanism adapted to be able to move said vibrating needle (55) from a position, called the retracted position in which it is spaced from said lower bead (6) of the lower layer, to a position, called the vibrating position, in which one end of the needle (55) can be inserted into said lower cord of said lower layer.

4. System according to claim 2, **characterized in that** said vibration means comprises a directional generator of mechanical waves (54) adapted to be able to generate mechanical waves towards said lower bead (6) of said lower layer in order to be able to locally fluidify this lower bead.

5. System according to claim 4, **characterized in that** the said directional generator of mechanical waves (54) is a generator of sound waves, of the high amplitude infrasound or low amplitude ultrasound type.

6. System according to claim 5, **characterized in that** said directional sound wave generator comprises a piezoelectric actuator.

7. System according to one of claims 1 to 6, **characterized in that** said fluidizing device (50) is carried by said extrusion head via a mounting support (32).

8. System according to claim 7, **characterized in that** said extrusion head (30) comprises a housing extending along a direction, called the longitudinal direction, and **in that** said mounting support (32) carrying said device for fluidizing (40) is rotatably mounted on said housing of said extrusion head (30) about an axis extending along said longitudinal direction.

9. System according to one of claims 1 to 8, **characterized in that** it further comprises an adjuvanting device.

10. Additive manufacturing robot (8) for architectural structures comprising a positioning system, such as an articulated arm, controlled by a control unit, and an extrusion system comprising an extrusion head (30) mounted on said control system, positioning so that the movement of the positioning system carrying said extrusion head along a predetermined path allows the manufacture of an architectural structure by stacking layers of cords of cementitious material, **characterized in that** said extrusion system conforms to one of claims 1 to 9.

11. A method of extruding cords of building material for additive manufacturing robot of architectural structures comprising:
- a step of supplying (E1) with construction material to an extrusion head (30) of cords of construction material from a storage tank (10) of construction material, said extrusion head (30) comprising an inlet mouth (31) of building material and an outlet nozzle (34) configured to form extruded beads of building material,
- a step of moving (E2) said extrusion head (30) along a predetermined path to form an architectural structure by stacking layers of extruded cords,
- a concomitant step of extrusion (E3) of cords of construction material by the extrusion head (30) during the movement of said extrusion head (30) on said predetermined path,
- a concomitant fluidification step (E4) of the strands extruded from a layer of strands, called the lower layer, extruded prior to the layer of cords in progress, called the upper layer, so as to maximize the adhesion between the cords of the upper layer and the lower layer,
**characterized in that** the fluidification step is performed downstream of the extrusion head on the predetermined path.
